# EUROPEAN PATENT SPECIFICATION

(11) **EP 1 979 817 B1**
(45) Date of publication and mention of the grant of the patent: **14.08.2019**
(21) Application number: 07763646.2
(22) Date of filing: 24.01.2007
(51) Int. Cl.: G06F 16/25, G06F 16/188

(54) **VIRTUAL REPOSITORY MANAGEMENT TO PROVIDE FUNCTIONALITY**
VERWALTUNG EINES VIRTUELLEN SPEICHERS ZUR BEREITSTELLUNG VON FUNKTIONEN
GESTION D'UN DÉPÔT D'ARCHIVES VIRTUEL POUR LUI CONFÉRER UNE FONCTIONNALITÉ

(30) Priority: 03.02.2006 US 764897 P; 16.02.2006 US 355554
(43) Date of publication of application: 15.10.2008
(73) Proprietor: EMC Corporation, Pleasanton CA 94566 (US)
(72) Inventor: ABNOUS, Razmik, Pleasanton, CA 94566 (US); SPIVAK, Victor, Pleasanton, CA 94566 (US); MERHOFF, Eric, Pleasanton, CA 94566 (US)
(74) Representative: Gill, David Alan
(86) International application number: PCT/US2007/001944
(87) International publication number: WO 2007/092160

(56) References cited:
- WO-A2-2005/101191
- US-A1- 2003 187 821
- US-A1- 2004 199 867
- US-A1- 2004 199 867

## Description

### BACKGROUND OF THE INVENTION

Information can be stored or managed by systems designed to help organize, manage, or otherwise provide useful functionality to the user or owner of the information. In some cases, an owner of information can have multiple systems that are managing or storing information that the owner desires to be able to control or manage in a similar or uniform manner. This can be especially true for documents that need to be managed for regulatory purposes. For example, financial, corporate, litigation, medical, personnel, and securities information may all need to be managed by the owner in a centralized and uniform manner. However, a given content system typically can only manage the content stored within itself and also a given content systems may not have a specific desired management capability. One approach to this problem has been to migrate content to a common platform, such as a common content management system, but in many cases such migration is time consuming and otherwise costly, given the vast amounts of data held and/or produced by some enterprises, for example, and migration does not enable owners of data to take advantage of useful life and/or desirable characteristics and/or native functionality of legacy systems. It would be beneficial to be able to manage content in multiple systems with different characteristics in a centralized and similar or uniform manner.

WO 2005/101191 discloses a plurality of repositories integrated into a virtual content repository including one or more content services, and employing a logical namespace for encompassing the plurality of repositories.

US 2004/199867 discloses a content management system including at least one content repository with external content items with a non-natively present functionality.

The invention is defined in the claims.

### BRIEF DESCRIPTION OF THE DRAWINGS

Various embodiments of the invention are disclosed in the following detailed description and the accompanying drawings.
Figure 1 is a block diagram illustrating an embodiment of a system for virtually managing repositories.
Figure 2 is a block diagram illustrating an embodiment of reference objects referring to external content.
Figure 3 is a flow diagram illustrating an embodiment of a process for virtual repository management to provide functionality.
Figure 4 is a flow diagram illustrating an embodiment of a process for virtual repository management to provide functionality.
Figure 5 is a flow diagram illustrating an embodiment of a process for virtual repository management to provide functionality.
Figure 6 is a flow diagram illustrating an embodiment of a process for finding objects of interest for virtual repository management that provides management functionality.
Figure 7 is a flow diagram illustrating an embodiment of a process for virtual repository management to provide management functionality.
Figure 8 is a flow diagram illustrating an embodiment of a process for providing management functionality for content stored in an external repository under virtual management.
Figure 9 is a flow diagram illustrating an embodiment of a process for virtual repository management to provide functionality.
Figure 10 is a flow diagram illustrating an embodiment of a process for virtual repository management to provide functionality.
Figure 11 is a flow diagram illustrating an embodiment of a process for virtual repository management to provide functionality.

### DETAILED DESCRIPTION

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. A component such as a processor or a memory described as being configured to perform a task includes both a general component that is temporarily configured to perform the task at a given time or a specific component that is manufactured to perform the task. In general, the order of the steps of disclosed processes maybe altered within the scope of the appended claims.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

The invention provides a computer-implemented method for virtual repository management to provide functionality including generating, populating, and storing a reference object comprising: receiving an indication at a content management system that a content management functionality is desired to be performed with respect to one or more external content items stored in a repository of at least one legacy content system that does not provide the desired content management functionality as a native functionality; generating reference objects for each of the one or more external content items; the reference objects representing external content items by referring to content in the one or more legacy content systems and comprising information that is stored in a structure in a database that enables the content management system to perform operations with respect to the external content items; populating each of the reference objects based at least in part on accessing data or associated metadata of each of the corresponding one or more external content items stored in the repository of the at least one legacy content system that does not provide the content management functionality; storing the reference objects in a metadata catalog of a content store of a content system, the content system being coupled to the content management system; and causing the repository to perform one or more native repository operations that enable a result associated with the desired content management functionality to be achieved using the reference objects to access the one or more external content items as if the one or more content items had been originally created within or ingested into the content management system; characterized in that: the step of causing the repository to perform the one or more native repository operations comprises: receiving a request to provide management functionality for at least one external content item stored in the repository of at least one legacy content system under virtual management; translating the request to perform the operation, the translated request using one or more appropriate commands for the legacy content system for the one or more native repository operations in a form associated with repository in which the at least one external content item is stored; transmitting the translated request to cause the repository to perform the operation; receiving from the repository a confirmation that the requested operation was performed with respect to the at least one external content item; and normalizing the confirmation that the operation was performed, wherein the step of normalizing comprises processing and/or formatting so that the information can be used by the content management system.

A corresponding system and computer program product is also provided.

As used herein, the term "external content item" refers to a content item, such as a file or other stored item, that is not ingested by and brought under direct control of a content management system and/or other system or application that is being used and/or configured to perform one or more content management functions with respect to the content item. Examples of external content items include files and other items managed by a "legacy" (for example, an older version of a content management system) or other content management system that is of a different type, e.g., from a different vendor or designed for a purpose other than content management (for example, customer relations management), than a content management system or application that is being used to provide one or more content management functions with respect to items stored in and managed by the legacy or other system. In some embodiments, an appropriate series of commands and appropriate processing of the returned responses to the series of commands are determined in order, to perform a given content management functionality uniformly for each of one or more repositories, legacy content management systems, and/or other external content management systems.

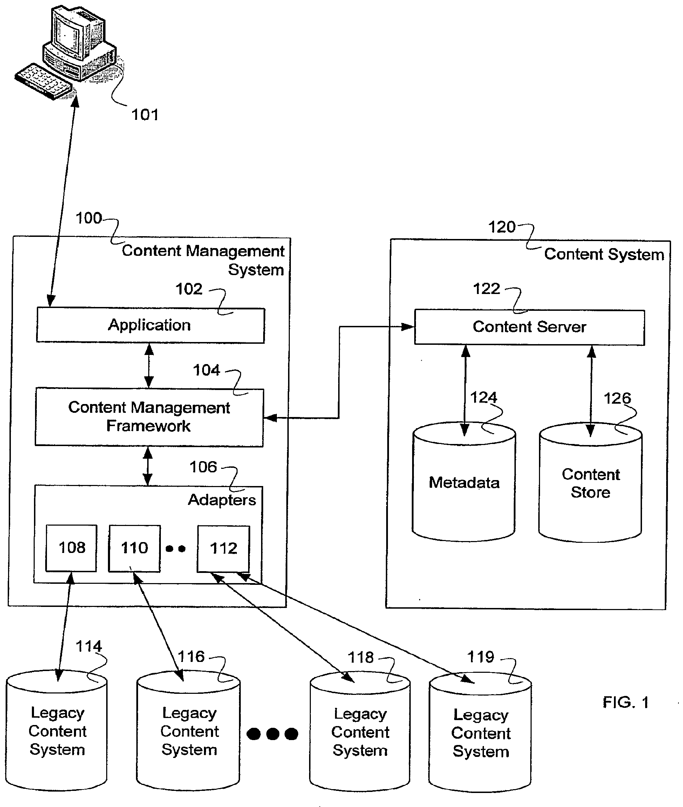

Figure 1 is a block diagram illustrating an embodiment of a system for virtually managing repositories. In the example shown, content management system 100 is coupled to content system 120 and one or more user systems, which are represented in Figure 1 by the personal computer or workstation 101. In various embodiments, content management system 100 is coupled to content system 120 and one or more user systems using a local network, a wide area network, the Internet, a wired network, a wireless network, or a direct connection. In some embodiments, users are coupled or connected to a system that is in turn coupled or connected to content management system 100 via network or direct connections. Content management system 100 is also coupled to one or more external content systems, represented in Figure 1 by legacy content systems 114, 116, 118, and 119. In some embodiments, an external content system comprises a system with associated content that has not been ingested into content management system 100 where the ingestion of content comprises taking the associated content under direct management and control of content management system 100. In various embodiments, a legacy or other external content system comprises an enterprise content management (ECM) system, an enterprise resource planning (ERP) system, a customer relations management (CRM) system, a business process management (BPM) system, different version of a system (for example, an older version of content management system 100), enterprise content integration (ECI) system, or enterprise application integration (EAI) system. In some embodiments, external content systems that are not "legacy" content systems, i.e. not an older system that is being managed by a newer content management system 100, are managed virtually as described herein. In some embodiments, a legacy or other external content system includes a content server, metadata, and a content store similar to content system 120. In some embodiments, a legacy or other external content system comprises a data repository.

In the example shown in Figure 1, content management system 100 includes application 102, content management framework 104, and adapters 106. One or more user systems interact with application 102 in order to make use of content management system functionality (for example, business process management, retention management, security management, etc.). In various embodiments, application 102 interacts with content management framework 104 that enables access to information or content that is stored in legacy content systems 114, 116, 118, and 119 and/or content system 120 or enables the application to store information to legacy content systems 114, 116, 118, and 119 and/or content system 120. To interact with legacy content systems 114, 116, 118, and 119, content management framework 104 is coupled to adapters 106. In some embodiments, content management framework 104 comprises foundation object classes and core operations and logic. Adapters 106 handle interactions between content management system100 and legacy systems 114, 116, 118, and 119. Adapters 106 include a plurality of adapters represented by 108, 110, and 112. In some embodiments, adapters 108, 110, and 112 are specific to a type of legacy or other external content system. For example, a type of customer relations management system, or a series of systems from the same vendor with similar interfacing requirements, has a corresponding adapter for communication with content management system 100. In the example shown, the interfacing requirements for legacy content system 118 and 119 are similar and content management system 100 uses adapter 112 to interact with both legacy content system 118 and legacy content system 119.

In some embodiments, adapters 106 translate commands from content management system 100 to the appropriate syntax and format required by a type of legacy or other external content system. In some embodiments, adapters 106 normalize the responses from a given type of legacy or other external content system to the appropriate syntax and format required by content management system 100. In some embodiments, translation requires creating a series of commands for a type of legacy or other external content system because the legacy or other external content system does not have a native command to support the requested functionality. In some embodiments, normalization requires performing computations on the responses from the legacy or other external content system because the requested functionality is not supported natively on the legacy or other external content system and it was synthetically created using a series of commands and some additional computation on the responses during the normalization.

Content system 120 includes content server 122, metadata 124, and content store 126. Content server 122 communicates with content management system 100 and provides stored content and/or metadata when requested by and/or via content management system 100 and/or stores content and/or associated metadata for content received from and/or via content management system 100. Metadata 124 contains information related to content stored in content store 126. In some embodiments, metadata 124 comprises a meta-catalog of content objects with respect to which one or more content management functions are available to be performed by and/or via content management system 100. In some embodiments, the meta-catalog includes content objects associated with items of content stored in content store 126 and also reference objects associated with items of content stored in legacy or other external content systems. In some embodiments, metadata information in metadata 124 is coupled with content stored in content store 126 - for example, security or retention information is coupled to content so that the security or retention information are always present and/or utilized for content management system applications.

In various embodiments, content management system 100, content system 120, and legacy content systems 114, 116, 118, and 119 are implemented using one or more hardware units, one or more processing units/devices, one or more storage units/devices, or one or more memory units/devices.

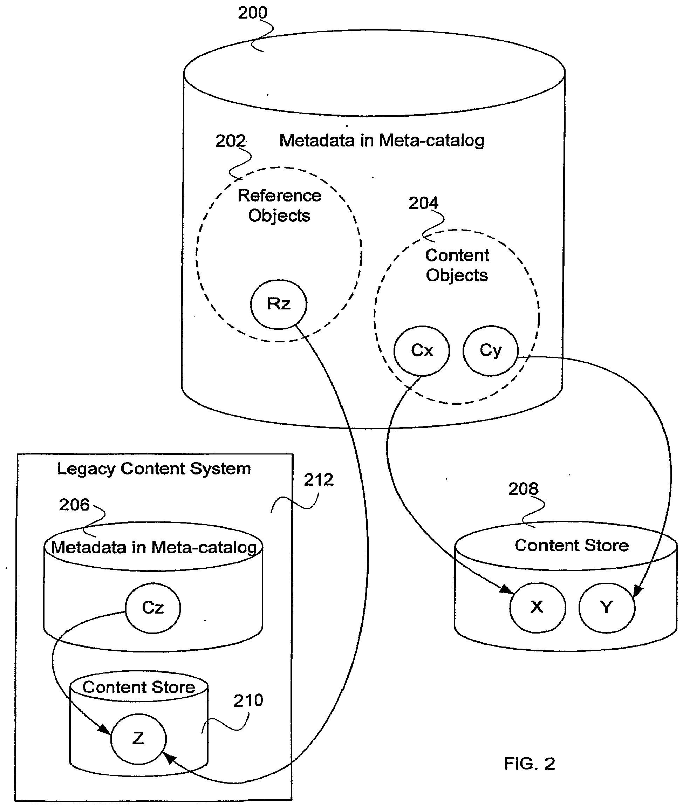

Figure 2 is a block diagram illustrating an embodiment of reference objects referring to external content. In some embodiments, metadata in meta-catalog 200 is included in metadata 124 of Figure 1 and content store 208 is content store 126. In the example shown, metadata in meta-catalog 200 includes content objects 204 that refer to items of content in content store 208. For example, content objects 204 include in the example shown in Figure 2 content objects Cx and Cy which refer to content items X and Y, respectively, in content store 208. In various embodiments, the content objects comprise a location pointer, e.g., pointing to a location in content store 208 in which a corresponding item of content is stored, a database row entry, a data structure with information such as content title, keywords associated with content, content location in content store 208, abstract of content, related documents/information, security information, retention information, or rules associated with information - e.g., publishing rules with regard to other formats such as HTML, PDF, etc., version control rules, or business process rules). In various embodiments, a location pointer is a physical address on a storage device, removable storage media, or in a memory or a logical address that enables access to a location on a storage device, removable storage media, or in a memory. Metadata in meta-catalog 200 also includes one or more reference objects 202, represented in Figure 2 by Rz, that refer to content in one or more legacy content systems represented in Figure 2 by legacy content system 212. Legacy content system 212 comprises a repository that has not been ingested directly into the content management system so that the information in the repository is not stored in the content management system and is not controlled directly by the content management system. In some embodiments, the legacy content systems are repositories or information systems that are not desired to be the central manager of information held in multiple systems. In the example shown, legacy content system 212 includes one or more items of content represented by Z in content store 210. A reference object Rz refers to the content Z in content store 210 and as described more fully below enables content management functions to be performed with respect to content item Z by and/or via a content management system associated with meta-catalog 200. The content item Z is represented in a legacy content system metadata 206 by a content object Cz. In this example, the legacy content system is a managed content system that, like the content system with which meta-catalog 200 and content store 208 are associated, generates and maintains a set of metadata in which each item of content under management by the legacy content system 212 is represented by a content object such as content object Cz. In some embodiments, external content stored in an external repository to be managed virtually is stored in an external repository that is not a managed repository, e.g., a content server or file system, such that the external content repository/system does not include an external system metadata such as metadata 206. In some embodiments, a reference object such as Rz is generated and populated at least in part by accessing data comprising and/or associated with content item Z. In some embodiments, a reference object such as Rz is generated and populated at least in part by accessing metadata associated with content item Z, such as content object Cz in the example shown.

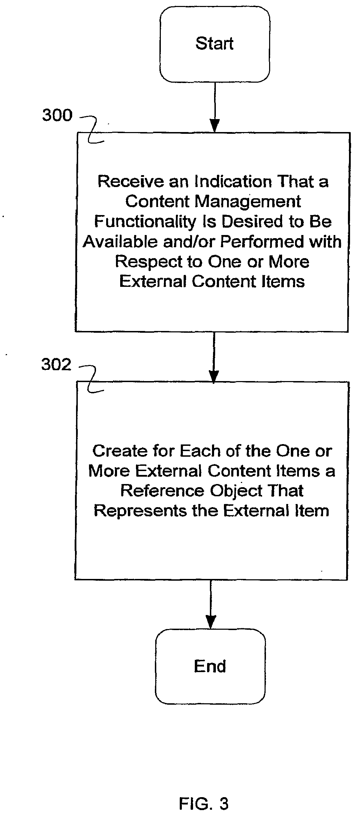

Figure 3 is a flow diagram illustrating an embodiment of a process for virtual repository management to provide functionality. In the example shown, in 300 an indication is received that management functionality is desired to be available and/or performed with respect to one or more external content items. In some embodiments, the external content items are in legacy content systems for which it is desired to have some centrally available management functionality. In some embodiments, virtual repository management of external content held in legacy content systems enables central management of content without the expense, difficulty, and/or risk associated with ingesting the contents of the legacy content system into the central content management system. In some embodiments, an indication that management functionality is desired to be available comprises a request that management functionality be performed. In various embodiments, the indication is received from a user, a user system, an application, a content management application, and/or a system administrator. In some embodiments, the indication is received after a search for content is performed across multiple content systems and content is selected for management from the search results. For example, search for content related to a law suit across an entire company's content systems locates content that is required for to be disclosed and/or preserved; the content is selected and managed by the central content system during the law suit. In 302, for each of the one or more external content items a reference object is created that represents the external content item. In some embodiments, the reference object is stored in the metadata in a meta-catalog. In some embodiments, the reference object provides the necessary information for the content management system to access the corresponding content in a legacy content system.

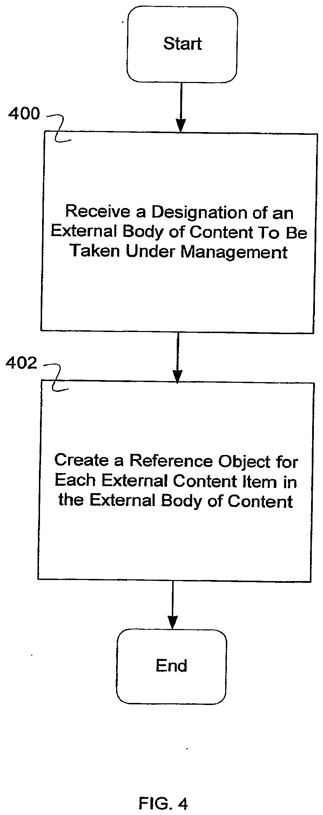

Figure 4 is a flow diagram illustrating an embodiment of a process for virtual repository management to provide functionality. In the example shown, in 400 a designation is received of an external body of content with respect to which full text indexing is desired to be available and/or performed. In various embodiments, the designation is received from a user, a user system, an application, a content management application, and/or a system administrator. In 402, a reference object is created for each external item of content in the external body of content. In some embodiments, a crawler is used to locate and select each item included in the external body of content. In various embodiments, the reference object includes metadata allowing access and manipulation of the content that is referred to by the reference object. In some embodiments, the process of Figure 4 is used to bring entire sets and/or bodies of external content items, e.g., all or a designated subset of content items in an external repository, under virtual management.

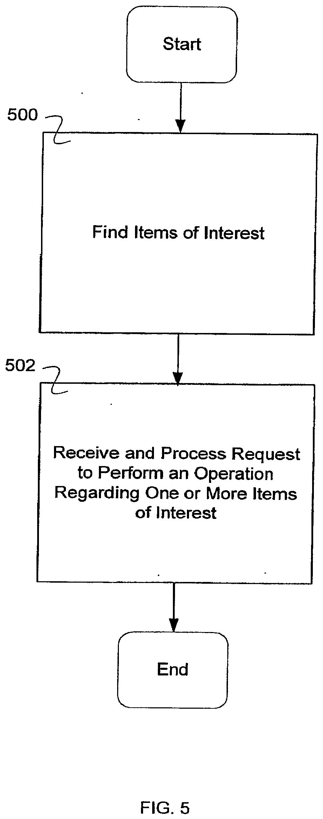

Figure 5 is a flow diagram illustrating an embodiment of a process for virtual repository management to provide functionality. In some embodiments, the process of Figure 5 is used to bring external content items under virtual management as the need/desire arises to provide management functionality centrally with respect to one or more particular external content items. In some embodiments, the process of Figure 5 is used instead of and/or in addition to the process of Figure 4. In the example shown, in 500 items of interest are found. In various embodiments, items of interest are found as a result of one or more searches in one or more repositories, items of interest are located by performing a search of information in one or more repositories, and/or items of interest are located by performing a search on crawler results of one or more repositories. In 502, a request to provide management functionality for one or more items of interest is received and processed. In some embodiments, at least a subset of the items of interest may be stored in an external repository and in 502 a reference object is created for any one or more of the items of interest that is/are stored in an external repository, if any, and then the operation is performed regarding the one or more items of interest.

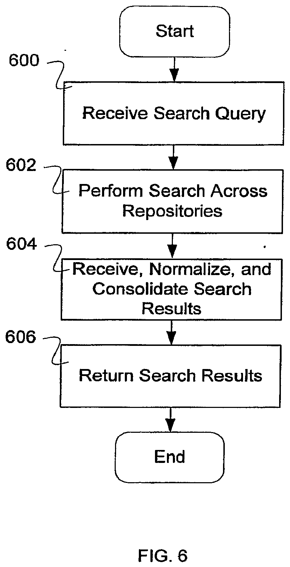

Figure 6 is a flow diagram illustrating an embodiment of a process for finding objects of interest for virtual repository management that provides management functionality. In some embodiments, the process of Figure 6 is used to implement 500 in Figure 5. In the example shown, in 600, a search query is received. In 602, a search is performed across repositories. In some embodiments, the repositories searched include one or more legacy and/or other external content systems. In some embodiments, the search requires translating a search command or series of commands to a command or series of commands appropriate for a given legacy or other external content system. In 604, search results are received, consolidated, and normalized. In some embodiments, the search results require normalization processing in order to format and change syntax so as to be useable by the content management system. In some embodiments, normalization processing involves complex processing where the translation of the search query to the legacy content system requires a complex series of commands and where these series of commands produce a series of results requiring further processing including integration before producing the desired result. In 606, the search results are returned. In some embodiments, the search results are returned to an application associated with a content management system used to perform the search.

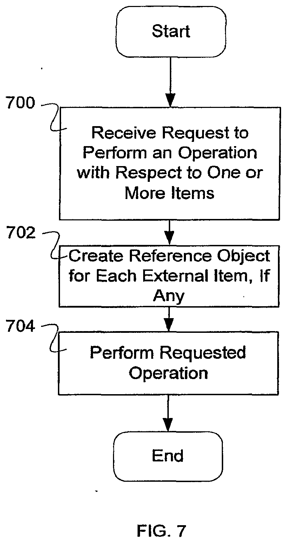

Figure 7 is a flow diagram illustrating an embodiment of a process for virtual repository management to provide management functionality. In some embodiments, the process of Figure 7 is used to implement 502 in Figure 5. In the example shown, in 700, a request is received to provide management functionality for one or more objects. The one or more items are associated with one or more legacy or other external content systems. In 702, a reference object is created for each external item, if any, associated with the request received at 700. In some embodiments, the reference object comprises information that is stored in a structure in a database that enables the content management system, its applications, and its framework to manipulate, access, and perform operations with respect to the external item of content referred to by the reference object. In some embodiments, the reference object allows operations to be performed with respect to the associated external item of content to the same extent as if the content had been originally created within or ingested into the content management system. In 704, the requested management functionality is provided.

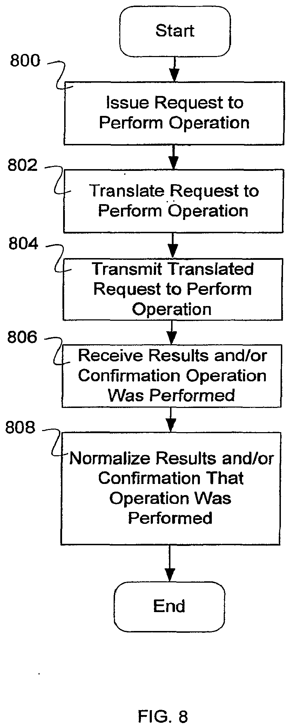

Figure 8 is a flow diagram illustrating an embodiment of a process for providing management functionality for content stored in an external repository under virtual management. In some embodiments, the process in Figure 8 is used to implement 704 of Figure 7 with respect to content stored in an external repository. In the example shown, in 800 a request is issued to perform an operation. In some embodiments, the operation is requested from one or more legacy or other external storage systems in order to provide a specific management functionality. In some embodiments, the request is issued by an application or by or through a content management framework service or utility to perform the operation. In 802, the request to perform the operation is translated. In some embodiments, an adapter translates the request to perform the operation. In some embodiments, it is checked whether or not a legacy or other external system has native capability to perform the requested operation. In some embodiments, the translation is taking the perform operation request and translating the command to one or more appropriate commands for a legacy or other external content system. In various embodiments, the perform operation functionality is native to the legacy or other external content system that is desired by the content management system, the perform operation functionality is not native to the legacy or other external content system but can be synthesized using a series of commands and post processing, and/or the perform operation functionality is not supported by the content legacy system and cannot be synthesized in which case an error message may be issued. In various embodiments, an adapter is used for one type of legacy or other external content system, a series of legacy or other external content systems, systems with similar translation requirements, and/or all types of legacy or other external content systems. In 804, the translated request to perform the operation is transmitted. In 806, the requested results and/or confirmation are/is received. In some embodiments, the operation request also returns some additional information (for example, metadata regarding the information requested). In 808, if required, the requested results and/or confirmation and additional information, if any, is normalized. In some embodiments, normalization processing comprises processing and/or formatting so that the requested content and additional information, if any, is useful for the content management system.

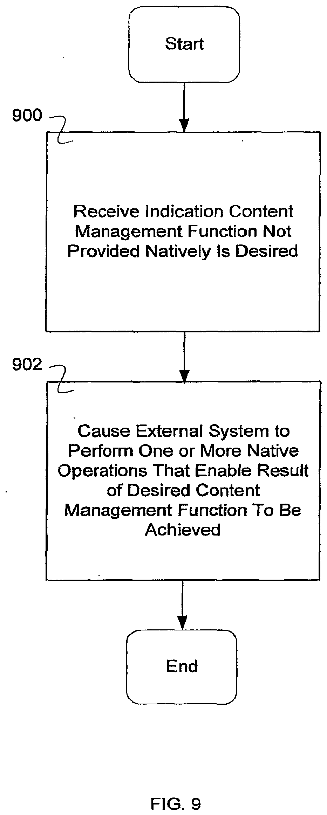

Figure 9 is a flow diagram illustrating an embodiment of a process for virtual repository management to provide functionality. In the example shown, in 900 an indication is received that content management function not provided natively is desired. In 902, an external system is caused to perform one or more native operations that enable the result of desired content management function to be achieved. In some embodiments, adapters 106 of Figure 1 receive the indication that content management function not provided natively is desired and cause an external or legacy system or repository to perform one or more native operations to enable the result of the desired content management function to be achieved. In some embodiments, adapters 106 query the external or legacy system or repository and based at least in part on the response determine whether the content management function is provided natively, and if not provided, then which one or more native operations enable the result for the desired content management function to be achieved.

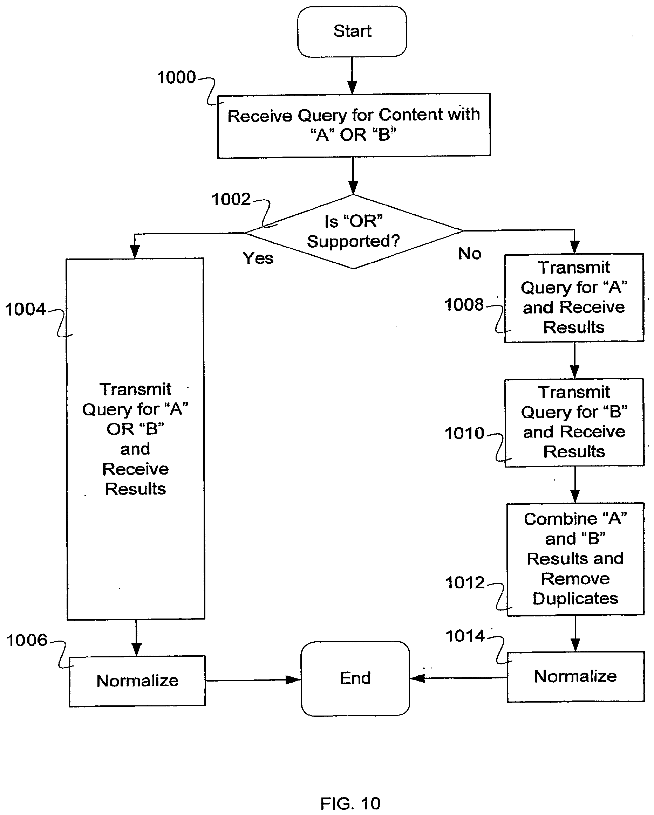

Figure 10 is a flow diagram illustrating an embodiment of a process for virtual repository management to provide functionality. In the example shown, in 1000 a query is received search for content with "A" OR "B." In 1002, it is determined if OR is supported in a legacy or other external system or repository. If OR is supported, then in 1004 a query is transmitted for "A" OR "B" and the results are received. In 1006 the results are normalized to be useful for the content management system, and the process ends. If OR is not supported, then the results from the two issued commands (to search for "A" and to search for "B") are processed so that they are useful to the content management system and provide the desired result. In 1008, a query for "A" is transmitted and the results are received, and in 1010, a query for "B" is transmitted and the results are received. In 1012, the results from the two issued commands are combined into a single list, and duplicates are eliminated. In some embodiments, the results are combined in a single ordered list, and duplicate entries in the list are removed, where duplicates are likely to lie next to each other in the ordered list. In 1014, the results are normalized in order to be useful for the content management system, and the process ends.

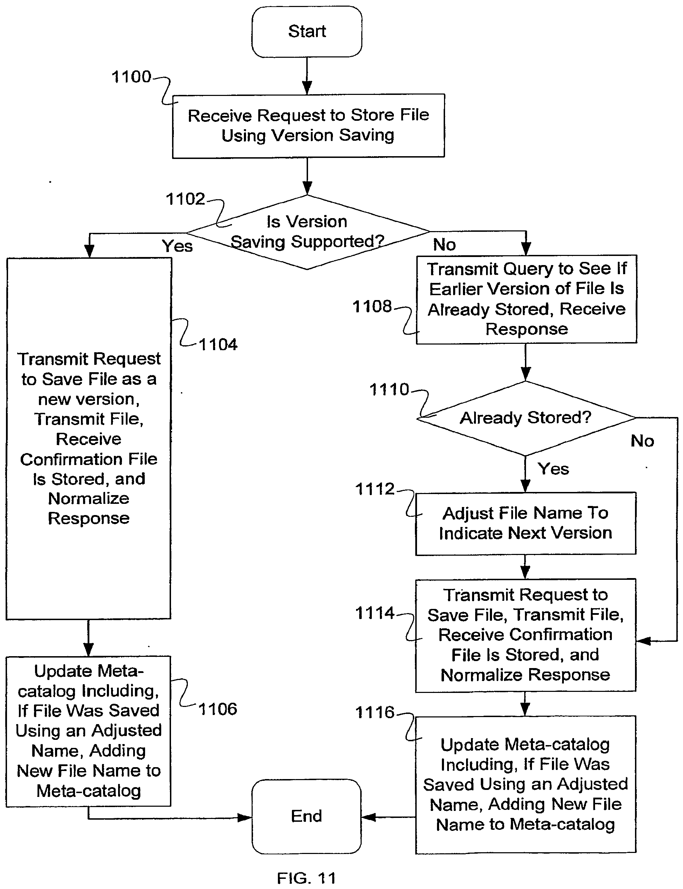

Figure 11 is a flow diagram illustrating an embodiment of a process for virtual repository management to provide functionality. In the example shown, in 1100 a request is received to store a file using version saving. In 1102, it is determined if version saving is supported in a legacy or other external system or repository. If it is supported, then in 1104 a request is transmitted to save the file as a new version, the file is transmitted, a confirmation is received that the file was stored, and the confirmation response is normalized to be useful for the content management system. In 1106, the meta-catalog is updated including, if the file was saved using an adjusted name, adding a new file name to the meta-catalog, and the process ends. If version saving is not supported, then a series of commands is synthesized to provide version saving for a file using one or more native commands to achieve the desired functionality. In 1108, a query is transmitted to see if a prior version of the file that is to be saved is already stored on the legacy or other external content system, and a response is received. In 1110, it is determined from the response, if a previous version of the file has already been stored. If a previous version has been stored, then in 1112, the file name is adjusted to indicate that a new version is being stored - for example, a version number is appended to the file name, and control passes to 1114. If a previous version has not been stored, then control passes to 1114. In 1114, a request is transmitted to save the file; the file is transmitted, a confirmation response is received and normalized to be useful to the content management system. In 1116, the meta-catalog is updated including, if the file was saved using an adjusted name adding a new file name to the meta-catalog, and the process ends. In some embodiments, adding the new file name to the meta-catalog includes adding a reference object that refers to the new file in the external or legacy system or repository and/or adding metadata that is based at least in part on the confirmation response information received when the file was saved and/or from metadata associated with a previous version of the file or a reference object associated with the previous version of the file.

Although the foregoing embodiments have been described in some detail for purposes of clarity of understanding, the invention is not limited to the details provided. There are many alternative ways of implementing the invention within the scope of the appended claims. The disclosed embodiments are illustrative and not restrictive.

## Claims

1. A computer-implemented method for virtual repository management to provide functionality including generating, populating, and storing a reference object comprising:
receiving (300) an indication at a content management system (100) that a content management functionality is desired to be performed with respect to one or more external content items (Z) stored in a repository of at least one legacy content system (114-119) that does not provide the desired content management functionality as a native functionality;
generating (302) reference objects (202) for each of the one or more external content items (Z);
the reference objects (202) representing external content items by referring to content in the one or more legacy content systems (114-116) and comprising information that is stored in a structure in a database that enables the content management system (100) to perform operations with respect to the external content items (Z);
populating each of the reference objects (202) based at least in part on accessing data or associated metadata of each of the corresponding one or more external content items (Z) stored in the repository of the at least one legacy content system (114-119) that does not provide the content management functionality;
storing the reference objects (202) in a metadata catalog (200) of a content store (126, 208) of a content system (120), the content system (120) being coupled to the content management system (100); and
causing the repository to perform one or more native repository operations that enable a result associated with the desired content management functionality to be achieved using the reference objects (202) to access the one or more external content items (Z) as if the one or more content items (Z) had been originally created within or ingested into the content management system (100);
**characterized in that**:
the step of causing the repository to perform the one or more native repository operations comprises:
receiving a request (700) to provide management functionality for at least one external content item (Z) stored in the repository of at least one legacy content system (114-119) under virtual management;
translating (802) the request to perform the operation, the translated request using one or more appropriate commands for the legacy content system (114-119) for the one or more native repository operations in a form associated with repository in which the at least one external content item (Z) is stored;
transmitting (804) the translated request to cause the repository to perform the operation;
receiving (806) from the repository a confirmation that the requested operation was performed with respect to the at least one external content item (Z); and
normalizing (808) the confirmation that the operation was performed, wherein the step of normalizing comprises processing and/or formatting so that the information can be used by the content management system.

2. A method as in claim 1, wherein the indication is for a content management functionality across multiple repositories and wherein each of the multiple repositories are caused to perform one or more native repository operations enabling the results associated with the content management functionality to be achieved.

3. A method as in claim 1, further comprising determining the one or more native repository operations that will enable the result to be achieved.

4. A method as in claim 1, further comprising merging or other further processing returned results of the one or more native repository operations to achieve the result.

5. A method as in claim 1, wherein the reference object (202) is part of meta-catalog (200) of managed content objects.

6. A method as in claim 1, wherein one or more external content objects are associated with an external content system.

7. A method as in claim 1, and including performing one or more operations to achieve the content management functionality by:
receiving results of the one or more operations; and
normalizing the results of the one or more operations.

8. A method as in claim 7, wherein normalizing includes processing results of the one or more operations so that the result can be used by the content management system (100).

9. A computer system for virtual repository management to provide functionality including generating, populating, and storing a reference object comprising:
a processor configured to:
receive (300) an indication at a content management system (100) that a content management functionality is desired to be performed with respect to one or more external content items (Z) stored in a repository of at least one legacy content system (114-119) that does not provide the desired content management functionality as a native functionality;
generating (302) reference objects (202) for each of the one or more external content items (Z);
the reference objects (202) representing external content items by referring to content in the one or more legacy content systems (114-116) and comprising information that is stored in a structure in a database that enables the content management system (100) to perform operations with respect to the external content items (Z);
populating each of the reference objects (202) based at least in part on accessing data or associated metadata of each of the corresponding one or more external content items (Z) stored in the repository of the at least one legacy content system (114-119) that does not provide the content management functionality;
storing the reference objects (202) in a metadata catalog (200) of a content store (126, 208) of a content system (120), the content system (120) being coupled to the content management system (100);
and to cause the repository to perform one or more native repository operations that enable a result associated with the desired content management functionality to be achieved using the reference objects (202) to access the one or more external content items (Z) as if the one or more content items (Z) had been originally created within or ingested into the content management system (100);
**characterized in that**:
the steps of causing the repository to perform the one or more native repository operations comprises:
receiving a request (700) to provide management functionality for at least one external content item (Z) stored in the repository of at least one legacy content system (114-119) under virtual management;
translating (802) the request to perform the operation, the translated request using one or more appropriate commands for the legacy content system (114-119) for the one or more native repository operations in a form associated with repository in which the at least one external content item (Z) is stored;
transmitting (804) the translated request to cause the repository to perform the operation;
receiving (806) from the repository a confirmation that the requested operation was performed with respect to the at least one external content item (Z); and
normalizing (808) the confirmation that the operation was performed, wherein the step of normalizing comprises processing and/or formatting so that the information can be used by the content management system; and
a memory coupled to the processor and configure to provide instructions to the processor.

10. A computer program product for virtual repository management to provide functionality including generating, populating and storing a reference object, the computer program product being embodied in a computer readable medium and comprising computer instructions for:
receiving (300) an indication at a content management system (100) that a content management functionality is desired to be performed with respect to one or more external content items (Z) stored in a repository of at least one legacy content system (114-119) that does not provide the desired content management functionality as a native functionality;
generating (302) reference objects (202) for each of the one or more external content items (Z);
the reference objects (202) representing external content items by referring to content in the one or more legacy content systems (114-116) and comprising information that is stored in a structure in a database that enables the content management system (100) to perform operations with respect to the external content items (Z);
populating each of the reference objects (202) based at least in part on accessing data or associated metadata of each of the corresponding one or more external content items (Z) stored in the repository of the at least one legacy content system (114-119) that does not provide the content management functionality;
storing the reference objects (202) in a metadata catalog (200) of a content store (126, 208) of a content system (120), the content system (120) being coupled to the content management system (100); and
causing the repository to perform one or more native repository operations that enable a result associated with the desired content management functionality to be achieved using the reference objects (202) to access the one or more external content items (Z) as if the one or more content items (Z) had been originally created within or ingested into the content management system (100);
**characterized in that**:
the step of causing the repository to perform the one or more native repository operations comprises:
receiving a request (700) to provide management functionality for at least one external content item (Z) stored in the repository of at least one legacy content system (114-119) under virtual management;
translating (802) the request to perform the operation, the translated request using one or more appropriate commands for the legacy content system (114-119) for the one or more native repository operations in a form associated with repository in which the at least one external content item (Z) is stored;
transmitting (804) the translated request to cause the repository to perform the operation;
receiving (806) from the repository a confirmation that the requested operation was performed with respect to the at least one external content item (Z); and
normalizing (808) the confirmation that the operation was performed, wherein the step of normalizing comprises processing and/or formatting so that the information can be used by the content management system.

## Patentansprüche

1. Computer-implementiertes Verfahren für virtuelle Repositorienverwaltung zur Bereitstellung von Funktionalität einschließlich Erzeugen, Auffüllen, und Speichern eines Referenzobjekts, wobei das Verfahren umfasst:
Empfangen (300) einer Anzeige bei einem Inhaltsverwaltungssystem (100), dass eine Inhaltsverwaltungsfunktionalität auszuführen gewünscht wird betreffend ein oder mehrere externe Inhaltsobjekte (Z), die in einem Repositorium von zumindest einem Vorgänger-Inhaltssystem (114-119) gespeichert sind, das die gewünschte Inhaltsverwaltungsfunktionalität nicht als systemeigene Funktionalität bereitstellt;
Erzeugen (302) von Referenzobjekten (202) für jedes der einen oder mehreren externen Inhaltsobjekte (Z);
Repräsentieren durch die Referenzobjekte (202) von externen Inhaltsobjekten vermittels Referenzen auf Inhalt in den einen oder mehreren Vorgänger-Inhaltssystemen (114-116) und Umfassen von Information, die in einer Struktur in einer Datenbank gespeichert ist, die das Inhaltsverwaltungssystem (100) befähigt, Operationen betreffend die externen Inhaltsobjekte (Z) auszuführen;
Auffüllen jedes der Referenzobjekte (202) basierend zumindest zum Teil auf Zugriffen auf Daten oder assoziierte Metadaten jedes der entsprechenden einen oder mehreren externen Inhaltsobjekte (Z), die in dem Repositorium des zumindest einen Vorgänger-Inhaltssystems (114-119) gespeichert sind, das die Inhaltsverwaltungsfunktionalität nicht bereitstellt;
Speichern der Referenzobjekte (202) in einem Metadaten-Katalog (200) eines Inhaltsspeichers (126, 208) eines Inhaltssystems (120), wobei das Inhaltssystem (120) mit dem Inhaltsverwaltungssystem (100) gekoppelt ist; und
Veranlassen des Repositoriums, eine oder mehrere systemeigene Repositoriumoperationen auszuführen, die ermöglichen, ein mit der gewünschten Inhaltsverwaltungsfunktionalität assoziiertes Ergebnis durch Nutzen der Referenzobjekte (202) zum Zugriff auf die eine oder mehreren externen Inhaltsobjekte (Z) zu erzielen, als wären die eine oder mehreren Inhaltsobjekte (Z) ursprünglich im Inhaltsverwaltungssystem (100) erzeugt oder darin aufgenommen worden;
**dadurch gekennzeichnet, dass**:
der Schritt des Veranlassens des Repositoriums, die eine oder mehreren systemeigenen Repositoriumoperationen auszuführen, umfasst:
Empfangen einer Anforderung (700), Verwaltungsfunktionalität für zumindest ein externes Inhaltsobjekt (Z) bereitzustellen, das im Repositorium zumindest eines unter virtueller Verwaltung stehenden Vorgänger-Inhaltssystems (114-119) gespeichert ist;
Übersetzen (802) der Anforderung zur Ausführung der Operation, wobei die übersetzte Anforderung einen oder mehrere geeignete Befehle für das Vorgänger-Inhaltssystem (114-119) für die eine oder mehreren systemeigenen Repositoriumoperationen in einer mit dem Repositorium, in dem das zumindest eine externe Inhaltsobjekt (Z) gespeichert ist, assoziierten Form benutzt;
Übertragen (804) der übersetzten Anforderung, um das Repositorium zum Ausführen der Operation zu veranlassen;
Empfangen (806) einer Bestätigung vom Repositorium, dass die angeforderte Operation betreffend das zumindest eine externe Inhaltsobjekt (Z) ausgeführt wurde; und
Normalisieren (808) der Bestätigung, dass die Operation ausgeführt wurde, wobei der Schritt des Normalisierens Verarbeiten und/oder Formatieren umfasst derart, dass die Information vom Inhaltsverwaltungssystem benutzt werden kann.

2. Verfahren nach Anspruch 1, wobei die Anzeige eine mehrere Repositorien übergreifende Inhaltsverwaltungsfunktionalität betrifft und wobei jedes der mehreren Repositorien veranlasst wird, eine oder mehrere systemeigene Repositoriumoperationen auszuführen, die das Erzielen der mit der Inhaltsverwaltungsfunktionalität assoziierten Ergebnisse ermöglichen.

3. Verfahren nach Anspruch 1, weiterhin umfassend das Bestimmen der einen oder mehreren systemeigenen Repositoriumoperationen, die das Erzielen des Ergebnisses ermöglichen.

4. Verfahren nach Anspruch 1, weiterhin umfassend das Eingliedern oder das andere weitere Bearbeiten von Ergebnissen, die die eine oder mehreren systemeigenen Repositoriumoperationen geliefert haben, um das Ergebnis zu erzielen.

5. Verfahren nach Anspruch 1, wobei das Referenzobjekt (202) Teil eines Metakatalogs (200) von verwalteten Inhaltsobjekten ist.

6. Verfahren nach Anspruch 1, wobei ein oder mehrere externe Inhaltsobjekte mit einem externen Inhaltssystem assoziiert sind.

7. Verfahren nach Anspruch 1, und einschließend das Ausführen einer oder mehrerer Operationen, um die Inhaltsverwaltungsfunktionalität zu erzielen durch:
Empfangen von Ergebnissen der einen oder mehreren Operationen; und
Normalisieren der Ergebnisse der einen oder mehreren Operationen.

8. Verfahren nach Anspruch 7, wobei das Normalisieren das Verarbeiten von Ergebnissen der einen oder mehreren Operationen einschließt derart, dass das Ergebnis vom Inhaltsverwaltungssystem (100) benutzt werden kann.

9. Computersystem für virtuelle Repositorienverwaltung zur Bereitstellung von Funktionalität einschließlich Erzeugen, Auffüllen, und Speichern eines Referenzobjekts, umfassend:
einen Prozessor, der konfiguriert ist zum:
Empfangen (300) einer Anzeige bei einem Inhaltsverwaltungssystem (100), dass eine Inhaltsverwaltungsfunktionalität auszuführen gewünscht wird betreffend ein oder mehrere externe Inhaltsobjekte (Z), die in einem Repositorium von zumindest einem Vorgänger-Inhaltssystem (114-119) gespeichert sind, das die gewünschte Inhaltsverwaltungsfunktionalität nicht als systemeigene Funktionalität bereitstellt;
Erzeugen (302) von Referenzobjekten (202) für jedes der einen oder mehreren externen Inhaltsobjekte (Z);
Repräsentieren durch die Referenzobjekte (202) von externen Inhaltsobjekten vermittels Referenzen auf Inhalt in den einen oder mehreren Vorgänger-Inhaltssystemen (114-116) und Umfassen von Information, die in einer Struktur in einer Datenbank gespeichert ist, die das Inhaltsverwaltungssystem (100) befähigt, Operationen betreffend die externen Inhaltsobjekte (Z) auszuführen;
Auffüllen jedes der Referenzobjekte (202) basierend zumindest zum Teil auf Zugriffen auf Daten oder assoziierte Metadaten jedes der entsprechenden einen oder mehreren externen Inhaltsobjekte (Z), die in dem Repositorium des zumindest einen Vorgänger-Inhaltssystems (114-119) gespeichert sind, das die Inhaltsverwaltungsfunktionalität nicht bereitstellt;
Speichern der Referenzobjekte (202) in einem Metadaten-Katalog (200) eines Inhaltsspeichers (126, 208) eines Inhaltssystems (120), wobei das Inhaltssystem (120) mit dem Inhaltsverwaltungssystem (100) gekoppelt ist;
und Veranlassen des Repositoriums, eine oder mehrere systemeigene Repositoriumoperationen auszuführen, die ermöglichen, ein mit der gewünschten Inhaltsverwaltungsfunktionalität assoziiertes Ergebnis durch Nutzen der Referenzobjekte (202) zum Zugriff auf die eine oder mehreren externen Inhaltsobjekte (Z) zu erzielen, als wären die eine oder mehreren Inhaltsobjekte (Z) ursprünglich im Inhaltsverwaltungssystem (100) erzeugt oder darin aufgenommen worden;
**dadurch gekennzeichnet, dass**:
der Schritt des Veranlassens des Repositoriums, die eine oder mehreren systemeigenen Repositoriumoperationen auszuführen, umfasst:
Empfangen einer Anforderung (700), Verwaltungsfunktionalität für zumindest ein externes Inhaltsobjekt (Z) bereitzustellen, das im Repositorium zumindest eines unter virtueller Verwaltung stehenden Vorgänger-Inhaltssystems (114-119) gespeichert ist;
Übersetzen (802) der Anforderung zur Ausführung der Operation, wobei die übersetzte Anforderung einen oder mehrere geeignete Befehle für das Vorgänger-Inhaltssystem (114-119) für die eine oder mehreren systemeigenen Repositoriumoperationen in einer mit dem Repositorium, in dem das zumindest eine externe Inhaltsobjekt (Z) gespeichert ist, assoziierten Form benutzt;
Übertragen (804) der übersetzten Anforderung, um das Repositorium zum Ausführen der Operation zu veranlassen;
Empfangen (806) einer Bestätigung vom Repositorium, dass die angeforderte Operation betreffend das zumindest eine externe Inhaltsobjekt (Z) ausgeführt wurde; und
Normalisieren (808) der Bestätigung, dass die Operation ausgeführt wurde, wobei der Schritt des Normalisierens Verarbeiten und/oder Formatieren umfasst derart, dass die Information vom Inhaltsverwaltungssystem benutzt werden kann; und
einen Arbeitsspeicher gekoppelt mit dem Prozessor und konfiguriert, dem Prozessor Instruktionen bereitzustellen.

10. Computerprogrammprodukt für virtuelle Repositorienverwaltung zum Bereitstellen von Funktionalität einschließlich Erzeugen, Auffüllen und Speichern eines Referenzobjekts, wobei das Computerprogrammprodukt in einem computerlesbaren Medium eingerichtet ist und Computerinstruktionen umfasst zum:
Empfangen (300) einer Anzeige bei einem Inhaltsverwaltungssystem (100), dass eine Inhaltsverwaltungsfunktionalität auszuführen gewünscht wird betreffend ein oder mehrere externe Inhaltsobjekte (Z), die in einem Repositorium von zumindest einem Vorgänger-Inhaltssystem (114-119) gespeichert sind, das die gewünschte Inhaltsverwaltungsfunktionalität nicht als systemeigene Funktionalität bereitstellt;
Erzeugen (302) von Referenzobjekten (202) für jedes der einen oder mehreren externen Inhaltsobjekte (Z);
Repräsentieren durch die Referenzobjekte (202) von externen Inhaltsobjekten vermittels Referenzen auf Inhalt in den einen oder mehreren Vorgänger-Inhaltssystemen (114-116) und Umfassen von Information, die in einer Struktur in einer Datenbank gespeichert ist, die das Inhaltsverwaltungssystem (100) befähigt, Operationen betreffend die externen Inhaltsobjekte (Z) auszuführen;
Auffüllen jedes der Referenzobjekte (202) basierend zumindest zum Teil auf Zugriffen auf Daten oder assoziierte Metadaten jedes der entsprechenden einen oder mehreren externen Inhaltsobjekte (Z), die in dem Repositorium des zumindest einen Vorgänger-Inhaltssystems (114-119) gespeichert sind, das die Inhaltsverwaltungsfunktionalität nicht bereitstellt;
Speichern der Referenzobjekte (202) in einem Metadaten-Katalog (200) eines Inhaltsspeichers (126, 208) eines Inhaltssystems (120), wobei das Inhaltssystem (120) mit dem Inhaltsverwaltungssystem (100) gekoppelt ist; und
Veranlassen des Repositoriums, eine oder mehrere systemeigene Repositoriumoperationen auszuführen, die ermöglichen, ein mit der gewünschten Inhaltsverwaltungsfunktionalität assoziiertes Ergebnis durch Nutzen der Referenzobjekte (202) zum Zugriff auf die eine oder mehreren externen Inhaltsobjekte (Z) zu erzielen, als wären die eine oder mehreren Inhaltsobjekte (Z) ursprünglich im Inhaltsverwaltungssystem (100) erzeugt oder darin aufgenommen worden;
**dadurch gekennzeichnet, dass**:
der Schritt des Veranlassens des Repositoriums, die eine oder mehreren systemeigenen Repositoriumoperationen auszuführen, umfasst:
Empfangen einer Anforderung (700), Verwaltungsfunktionalität für zumindest ein externes Inhaltsobjekt (Z) bereitzustellen, das im Repositorium zumindest eines unter virtueller Verwaltung stehenden Vorgänger-Inhaltssystems (114-119) gespeichert ist;
Übersetzen (802) der Anforderung zur Ausführung der Operation, wobei die übersetzte Anforderung einen oder mehrere geeignete Befehle für das Vorgänger-Inhaltssystem (114-119) für die eine oder mehreren systemeigenen Repositoriumoperationen in einer mit dem Repositorium, in dem das zumindest eine externe Inhaltsobjekt (Z) gespeichert ist, assoziierten Form benutzt;
Übertragen (804) der übersetzten Anforderung, um das Repositorium zum Ausführen der Operation zu veranlassen;
Empfangen (806) einer Bestätigung vom Repositorium, dass die angeforderte Operation betreffend das zumindest eine externe Inhaltsobjekt (Z) ausgeführt wurde; und
Normalisieren (808) der Bestätigung, dass die Operation ausgeführt wurde, wobei der Schritt des Normalisierens Verarbeiten und/oder Formatieren umfasst derart, dass die Information vom Inhaltsverwaltungssystem benutzt werden kann.

## Revendications

1. Un procédé mis en oeuvre par ordinateur de gestion de référentiel virtuelle de façon à fournir une fonctionnalité comprenant la génération, le garnissage et la conservation en mémoire d'un objet de référence comprenant :
la réception (300) d'une indication au niveau d'un système de gestion de contenus (100) qu'une fonctionnalité de gestion de contenus est souhaitée être exécutée par rapport à un ou plusieurs éléments de contenu externes (Z) conservés en mémoire dans un référentiel d'au moins un système de contenus patrimonial (114-119) qui ne fournit pas la fonctionnalité de gestion de contenus souhaitée en tant que fonctionnalité native,
la génération (302) d'objets de référence (202) pour chacun des un ou plusieurs éléments de contenu externes (Z),
les objets de référence (202) représentant des éléments de contenu externes par la référence à un contenu dans les un ou plusieurs systèmes de contenus patrimoniaux (114-116) et comprenant des informations qui sont conservées en mémoire dans une structure dans une base de données qui permet au système de gestion de contenus (100) d'exécuter des opérations par rapport aux éléments de contenu externes (Z),
le garnissage de chacun des objets de référence (202) en fonction au moins en partie de l'accès à des données ou des métadonnées associées de chacun des un ou plusieurs éléments de contenu externes correspondants (Z) conservés en mémoire dans le référentiel du au moins un système de contenus patrimonial (114-119) qui ne fournit pas la fonctionnalité de gestion de contenus,
la conservation en mémoire des objets de référence (202) dans un catalogue de métadonnées (200) d'un espace mémoire de contenus (126, 208) d'un système de contenus (120), le système de contenus (120) étant couplé au système de gestion de contenus (100), et
l'opération consistant à amener le référentiel à exécuter une ou plusieurs opérations de référentiel natives qui permettent à un résultat associé à la fonctionnalité de gestion de contenus souhaitée d'être obtenu au moyen des objets de référence (202) de façon à accéder aux un ou plusieurs éléments de contenu externes (Z) comme si les un ou plusieurs éléments de contenu (Z) avaient été créés à l'origine à l'intérieur de ou ingérés dans le système de gestion de contenus (100),
**caractérisé en ce que** :
l'opération consistant à amener le référentiel à exécuter les une ou plusieurs opérations de référentiel natives comprend :
la réception d'une demande (700) de fourniture d'une fonctionnalité de gestion destinée à au moins un élément de contenu externe (Z) conservé en mémoire dans le référentiel d'au moins un système de contenus patrimonial (114-119) soumis à une gestion virtuelle,
la conversion (802) de la demande d'exécution de l'opération, la demande convertie utilisant une ou plusieurs commandes appropriées destinées au système de contenus patrimonial (114-119) pour les une ou plusieurs opérations de référentiel natives dans une forme associée à un référentiel dans lequel le au moins un élément de contenu externe (Z) est conservé en mémoire,
la transmission (804) de la demande convertie de façon à amener le référentiel à exécuter l'opération,
la réception (806) à partir du référentiel d'une confirmation que l'opération demandée a été exécutée par rapport au au moins un élément de contenu externe (Z), et
la normalisation (808) de la confirmation que l'opération a été exécutée, où l'opération de normalisation comprend un traitement et/ou une mise en forme de sorte que les informations puissent être utilisées par le système de gestion de contenus.

2. Un procédé selon la Revendication 1, où l'indication est destinée à une fonctionnalité de gestion de contenus sur une pluralité de référentiels et où chaque référentiel de la pluralité de référentiels est amené à exécuter une ou plusieurs opérations de référentiel natives, permettant aux résultats associés à la fonctionnalité de gestion de contenus d'être obtenus.

3. Un procédé selon la Revendication 1, comprenant en outre la détermination des une ou plusieurs opérations de référentiel natives qui permettront au résultat d'être obtenu.

4. Un procédé selon la Revendication 1, comprenant en outre la fusion ou un autre traitement de résultats renvoyés des une ou plusieurs opérations de référentiel natives de façon à obtenir le résultat.

5. Un procédé selon la Revendication 1, où l'objet de référence (202) fait partie d'un méta-catalogue (200) d'objets de contenu gérés.

6. Un procédé selon la Revendication 1, où un ou plusieurs objets de contenu externes sont associés à un système de contenus externe.

7. Un procédé selon la Revendication 1, et comprenant l'exécution d'une ou de plusieurs opérations de façon à obtenir la fonctionnalité de gestion de contenus par :
la réception de résultats des une ou plusieurs opérations, et
la normalisation des résultats des une ou plusieurs opérations.

8. Un procédé selon la Revendication 7, où la normalisation comprend le traitement de résultats des une ou plusieurs opérations de sorte que le résultat puisse être utilisé par le système de gestion de contenus (100).

9. Un système informatique de gestion de référentiel virtuelle destiné à la fourniture d'une fonctionnalité comprenant la génération, le garnissage et la conservation en mémoire d'un objet de référence comprenant :
un processeur configuré de façon à :
recevoir (300) une indication au niveau d'un système de gestion de contenus (100) qu'une fonctionnalité de gestion de contenus est souhaitée être exécutée par rapport à un ou plusieurs éléments de contenu externes (Z) conservés en mémoire dans un référentiel d'au moins un système de contenus patrimonial (114-119) qui ne fournit pas la fonctionnalité de gestion de contenus souhaitée en tant que fonctionnalité native,
la génération (302) d'objets de référence (202) pour chacun des un ou plusieurs éléments de contenu externes (Z),
les objets de référence (202) représentant des éléments de contenu externes par la référence à un contenu dans les un ou plusieurs systèmes de contenus patrimoniaux (114-116) et comprenant des informations qui sont conservées en mémoire dans une structure dans une base de données qui permet au système de gestion de contenus (100) d'exécuter des opérations par rapport aux éléments de contenu externes (Z),
le garnissage de chacun des objets de référence (202) en fonction au moins en partie d'un accès à des données ou des métadonnées associées de chacun des un ou plusieurs éléments de contenu externes correspondants (Z) conservés en mémoire dans le référentiel du au moins un système de contenus patrimonial (114-119) qui ne fournit pas la fonctionnalité de gestion de contenus,
la conservation en mémoire des objets de référence (202) dans un catalogue de métadonnées (200) d'un espace mémoire de contenus (126, 208) d'un système de contenus (120), le système de contenus (120) étant couplé au système de gestion de contenus (100), et
l'opération consistant à amener le référentiel à exécuter une ou plusieurs opérations de référentiel natives qui permettent à un résultat associé à la fonctionnalité de gestion de contenus souhaitée d'être obtenu au moyen des objets de référence (202) de façon à accéder aux un ou plusieurs éléments de contenu externes (Z) comme si les un ou plusieurs éléments de contenu (Z) avaient été créés à l'origine à l'intérieur de ou ingérés dans le système de gestion de contenus (100),
**caractérisé en ce que** :
les opérations consistant à amener le référentiel à exécuter les une ou plusieurs opérations de référentiel natives comprennent :
la réception d'une demande (700) de fourniture d'une fonctionnalité de gestion pour au moins un élément de contenu externe (Z) conservé en mémoire dans le référentiel d'au moins un système de contenus patrimonial (114-119) soumis à une gestion virtuelle,
la conversion (802) de la demande d'exécution de l'opération, la demande convertie utilisant une ou plusieurs commandes appropriées destinées au système de contenus patrimonial (114-119) pour les une ou plusieurs opérations de référentiel natives dans une forme associée à un référentiel dans lequel le au moins un élément de contenu externe (Z) est conservé en mémoire,
la transmission (804) de la demande convertie de façon à amener le référentiel à exécuter l'opération,
la réception (806) à partir du référentiel d'une confirmation que l'opération demandée a été exécuté par rapport au au moins un élément de contenu externe (Z), et
la normalisation (808) de la confirmation que l'opération a été exécutée,
où l'opération de normalisation comprend un traitement et/ou une mise en forme de sorte que les informations puissent être utilisées par le système de gestion de contenus, et
une mémoire couplée au processeur et configurée de façon à fournir des instructions au processeur.

10. Un produit de programme informatique de gestion de référentiel virtuelle de façon à fournir une fonctionnalité comprenant la génération, le garnissage et la conservation en mémoire d'un objet de référence, le produit de programme informatique étant incorporé dans un support lisible par ordinateur et comprenant des instructions informatiques destinées à :
la réception (300) d'une indication au niveau d'un système de gestion de contenus (100) qu'une fonctionnalité de gestion de contenus est souhaitée être exécutée par rapport à un ou plusieurs éléments de contenu externes (Z) conservés en mémoire dans un référentiel d'au moins un système de contenus patrimonial (114-119) qui ne fournit pas la fonctionnalité de gestion de contenus souhaitée en tant que fonctionnalité native,
la génération (302) d'objets de référence (202) pour chacun des un ou plusieurs éléments de contenu externes (Z), les objets de référence (202) représentant des éléments de contenu externes par la référence à un contenu dans les un ou plusieurs systèmes de contenus patrimoniaux (114-116) et comprenant des informations qui sont conservées en mémoire dans une structure dans une base de données qui permet au système de gestion de contenus (100) d'exécuter des opérations par rapport aux éléments de contenu externes (Z),
le garnissage de chacun des objets de référence (202) en fonction au moins en partie d'un accès à des données ou des métadonnées associées de chacun des un ou plusieurs éléments de contenu externes correspondants (Z) conservés en mémoire dans le référentiel du au moins un système de contenus patrimonial (114-119) qui ne fournit pas la fonctionnalité de gestion de contenus,
la conservation en mémoire des objets de référence (202) dans un catalogue de métadonnées (200) d'un espace mémoire de contenus (126, 208) d'un système de contenus (120), le système de contenus (120) étant couplé au système de gestion de contenus (100), et
l'opération consistant à amener le référentiel à exécuter une ou plusieurs opérations de référentiel natives qui permettent à un résultat associé à la fonctionnalité de gestion de contenus souhaitée d'être obtenu au moyen des objets de référence (202) de façon à accéder aux un ou plusieurs éléments de contenu externes (Z) comme si les un ou plusieurs éléments de contenu (Z) avaient été créés à l'origine à l'intérieur de ou ingérés dans le système de gestion de contenus (100),
**caractérisé en ce que** :
l'opération consistant à amener le référentiel à exécuter les une ou plusieurs opérations de référentiel natives comprend :
la réception d'une demande (700) de fourniture d'une fonctionnalité de gestion pour au moins un élément de contenu externe (Z) conservé en mémoire dans le référentiel d'au moins un système de contenus patrimonial (114-119) soumis à une gestion virtuelle,
la conversion (802) de la demande d'exécution de l'opération, la demande convertie utilisant une ou plusieurs commandes appropriées destinées au système de contenus patrimonial (114-119) pour les une ou plusieurs opérations de référentiel natives dans une forme associée à un référentiel dans lequel le au moins un élément de contenu externe (Z) est conservé en mémoire,
la transmission (804) de la demande convertie de façon à amener le référentiel à exécuter l'opération,
la réception (806) à partir du référentiel d'une confirmation que l'opération demandée a été exécutée par rapport au au moins un élément de contenu externe (Z), et
la normalisation (808) de la confirmation que l'opération a été exécutée, où l'opération de normalisation comprend un traitement et/ou une mise en forme de sorte que les informations puissent être utilisées par le système de gestion de contenus.
